(19) Europäisches Patentamt
European Patent Office
Office européen des brevets

(11) **EP 3 604 779 B1**

(12) **EUROPEAN PATENT SPECIFICATION**

(45) Date of publication and mention
of the grant of the patent:
**14.04.2021 Bulletin 2021/15**

(21) Application number: **17903534.0**

(22) Date of filing: **31.03.2017**

(51) Int Cl.:
*F02D 45/00* (2006.01)          *G01P 3/44* (2006.01)
*F02D 35/02* (2006.01)          *F02D 41/00* (2006.01)
*F02D 41/24* (2006.01)          *F02D 41/14* (2006.01)

(86) International application number:
**PCT/JP2017/013611**

(87) International publication number:
**WO 2018/179340 (04.10.2018 Gazette 2018/40)**

(54) **ENGINE VEHICLE, INTER-GEAR TEETH ERROR REMOVAL METHOD FOR CRANK PULSAR ROTOR, AND DEVICE**

MOTORFAHRZEUG, VERFAHREN ZUM ENTFERNEN VON VERZAHNUNGSFEHLERN ZWISCHEN DEN GETRIEBEN FÜR EINEN KURBELPULSARROTOR UND VORRICHTUNG

VÉHICULE À MOTEUR, PROCÉDÉ DE SUPPRESSION D'ERREUR DE DENTURES INTER-ENGRENAGE POUR ROTOR À IMPULSIONS DE SÉLECTEUR, ET DISPOSITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.02.2020 Bulletin 2020/06**

(73) Proprietor: **Honda Motor Co., Ltd.**
**Tokyo 107-8556 (JP)**

(72) Inventors:
• **KISHI, Nobuyuki**
  **Wako-shi**
  **Saitama 351-0193 (JP)**
• **TOMODA, Akihiko**
  **Wako-shi**
  **Saitama 351-0193 (JP)**
• **SASAKI, Tomiyuki**
  **Wako-shi**
  **Saitama 351-0193 (JP)**

(74) Representative: **Weickmann & Weickmann PartmbB**
**Postfach 860 820**
**81635 München (DE)**

(56) References cited:
EP-A1- 0 583 495          WO-A2-01/77692
DE-A1- 19 540 674          DE-A1-102014 220 509
DE-A1-102016 108 193       JP-A- H1 054 295
JP-A- H10 176 590          JP-A- H10 176 590
JP-A- H10 231 749          JP-A- 2004 536 993
JP-A- 2014 199 040         JP-A- 2014 199 040
JP-A- 2016 070 255         JP-A- 2016 070 255
US-A1- 2013 080 104

## Description

Technical Field

The present invention relates to an engine vehicle, an inter-gear teeth error removal method for a crank pulser rotor and a device, and particularly to an engine vehicle, an inter-gear teeth error removal method for a crank pulser rotor and a device suitable for a non-uniform interval explosion engine or a single cylinder engine.

Background Art

In a four-wheeled vehicle, a technology is known which decides a misfire of an engine on the basis of a crank angular velocity measured from crank pulse generation time intervals (crank pulse time intervals). Since a parameter for a misfire decision (misfire parameter) includes an angular velocity component arising from an inter-gear teeth error of a crank pulser rotor, in order to achieve an accurate misfire decision, it is necessary to remove an inter-gear teeth error.

PTL 1 discloses an inter-gear teeth error removal method for a crank pulser rotor that focuses on that an angular velocity component arising from inertia torque in a uniform interval explosion engine changes in a generation cycle of top dead center (TDC) pulses. WO 01/77692 A2 discloses an inter-gear teeth error removal device for a crank pulser rotor compensating for torsional vibrations.

Citation List

Patent Literature

[PTL 1] Japanese Patent Laid-Open No. 2008-111354

Summary

Technical Problem

In recent years, from a point of view of improvement in repairability and environmental protection, also in a motorcycle (motorcycle), adoption of a misfire decision technology is being studied. In a motorcycle, from the requirement of diversity for a performance or a feature of an engine, a non-uniform interval explosion engine or a single cylinder engine is adopted.

However, since the inter-gear teeth error removal method for a crank pulser rotor of PTL 1 is a technology that utilizes a characteristic of a uniform interval explosion engine, the principle of the technology cannot be applied to a non-uniform interval explosion engine or a single cylinder engine.

The object of the present invention resides in provision of an engine vehicle, an inter-gear teeth error removal method for a crank pulser rotor and a device that solve the technical problem described above and can remove an inter-gear teeth error of a crank pulser rotor from a misfire parameter to achieve accurate misfire decision also in a non-uniform interval explosion engine or a single cylinder engine.

Means for solving problems

To achieve the afore-mentioned object, the feature of the present invention is to have following features in an inter-gear teeth error removal device and method for a crank pulser rotor.

(1) An inter-gear teeth error removal method for a crank pulser rotor of the present invention detecting an angular velocity at each crank angle from an inter-crank pulse time period; calculating, based on the angular velocity at each crank angle, a relative angular velocity at each crank angle with respect to a reference angular velocity detected in proximity of a compression top dead center of an engine; integrating the relative angular velocity within a given crank angle range to calculate an integration angular velocity; removing an inertia torque component and a pumping torque component from the integration angular velocity to calculate a post-removal integration angular velocity; calculating and learning an inter-gear teeth error coefficient from the post-removal integration angular velocity; calculating an inter-gear teeth error component at each engine speed using the inter-gear teeth error coefficient; and removing the inter-gear teeth error component from the post-removal integration angular velocity.

(2) The angular velocity is detected in a state in which combustion torque is not substantially generated.

(3) The inter-gear teeth error coefficient is calculated by dividing the post-removal integration angular velocity by the reference angular velocity detected in the proximity of the engine compression top dead center.

(4) The inter-gear teeth error component is calculated by multiplying the inter-gear teeth error coefficient by the reference angular velocity detected in the proximity of the engine compression top dead center.

(5) The relative angular velocity is calculated by removing the angular velocity fluctuation component arising from load torque applied from a tire or an auxiliary machine of a vehicle driven by the engine and friction of a sliding part of the engine (the first angular speed fluctuation component) from a detection result of the angular velocity.

(6) The standard vehicle that includes an ideal crank pulser rotor whose inter-gear teeth error is substantially zero is operated in a steady state with substantially no combustion torque generated in the chassis; detecting an angular velocity at each crank angle; calculating a relative angular velocity at each crank angle with respect to a reference angular velocity detected in the proximity of the compression top dead center of the engine on a basis of the angular velocity at each crank angle; integrating the relative angular velocity within a given crank angle range to calculate an integration angular velocity; removing an inertia torque component from the integration angular velocity to determine a pumping torque component; and setting data to an electronic control unit (ECU) and using the data as the pumping torque component.

(7) An inter-gear teeth error removal device for a crank pulser rotor of the present invention comprises means detecting an angular velocity at each crank angle from an inter-crank pulse time period; means calculating, based on the angular velocity at each crank angle, a relative angular velocity at each crank angle with respect to a reference angular velocity detected in proximity of a compression top dead center of an engine; means integrating the relative angular velocity within a given crank angle range to calculate an integration angular velocity; means removing an inertia torque component and a pumping torque component from the integration angular velocity or the angular velocity before integration to calculate a post-removal integration angular velocity; means calculating and learning an inter-gear teeth error coefficient from the post-removal integration angular velocity; means calculating an inter-gear teeth error component at each engine speed using the inter-gear teeth error coefficient; and means removing the inter-gear teeth error component from the post-removal integration angular velocity.

(8) An engine vehicle of the present invention comprises means detecting an angular velocity at each crank angle from an inter-crank pulse time period; means calculating, based on the angular velocity at each crank angle, a relative angular velocity at each crank angle with respect to a reference angular velocity detected in proximity of a compression top dead center of an engine; means integrating the relative angular velocity within a given crank angle range to calculate an integration angular velocity; means removing an inertia torque component and a pumping torque component from the integration angular velocity to calculate a post-removal integration angular velocity; means calculating and learning an inter-gear teeth error coefficient from the post-removal integration angular velocity; means calculating an inter-gear teeth error component at each engine speed using the inter-gear teeth error coefficient; and means removing the inter-gear teeth error component from the post-removal integration angular velocity.

Advantageous Effects of Invention

(1) An inter-gear teeth error removal method for a crank pulser rotor of the present invention detecting an angular velocity at each crank angle from an inter-crank pulse time period; calculating, based on the angular velocity at each crank angle, a relative angular velocity at each crank angle with respect to a reference angular velocity detected in proximity of a compression top dead center of an engine; integrating the relative angular velocity within a given crank angle range to calculate an integration angular velocity; removing an inertia torque component and a pumping torque component from the integration angular velocity to calculate a post-removal integration angular velocity; calculating and learning an inter-gear teeth error coefficient from the post-removal integration angular velocity; calculating an inter-gear teeth error component at each engine speed using the inter-gear teeth error coefficient; and removing the inter-gear teeth error component from the post-removal integration angular velocity. Therefore, also in a non-uniform interval explosion engine or a single cylinder engine, when the integration value of the relative angular velocity is adopted as a misfire parameter, it is possible to remove an inter-gear teeth error from the misfire parameter without measuring an error for each inter-gear teeth of the crank pulser rotor, and misfire decision of high accuracy can be achieved.

(2) Since the angular velocity is detected in a state in which combustion torque is substantially not generated, it is possible to exclude the influence of the combustion torque.

(3) Since the inter-gear teeth error coefficient is calculated by dividing the post-removal integration angular velocity by the reference angular velocity detected in the proximity of the engine compression top dead center, an inter-gear teeth error coefficient that does not rely upon the engine speed is determined.

(4) Since the inter-gear teeth error component is calculated by multiplying the inter-gear teeth error coefficient by the reference angular velocity detected in the proximity of the engine compression top dead center, it is possible to calculate an inter-gear teeth error component at an arbitrary engine speed.

(5) Since the relative angular velocity is calculated by removing the first angular speed fluctuation component from a detection result of the angular velocity, it is possible to exclude the influence of the first angular velocity fluctuation component.

(6) The standard vehicle that includes an ideal crank pulser rotor whose inter-gear teeth error is substantially zero is operated in a steady state with substantially no combustion torque generated in the chassis; detecting an angular velocity at each crank angle; calculating a relative angular velocity at each crank angle with respect to a reference angular velocity detected in the proximity of the compression top dead center of the engine on a basis of the angular velocity at each crank angle; integrating the relative angular velocity within a given crank angle range to calculate an integration angular velocity; removing an inertia torque component from the integration angular velocity to determine a pumping torque component; and setting data to an ECU and using the data as the pumping torque component. Therefore, it is possible to remove a pumping torque component from the integration value of the relative angular velocity detected on a mass sales car.

(7) An inter-gear teeth error removal device for a crank pulser rotor of the present invention comprises means detecting an angular velocity at each crank angle from an inter-crank pulse time period; means calculating, based on the angular velocity at each crank angle, a relative angular velocity at each crank angle with respect to a reference angular velocity detected in proximity of a compression top dead center of an engine; means integrating the relative angular velocity within a given crank angle range to calculate an integration angular velocity; means removing an inertia torque component and a pumping torque component from the integration angular velocity or the angular velocity before integration to calculate a post-removal integration angular velocity; means calculating and learning an inter-gear teeth error coefficient from the post-removal integration angular velocity; means calculating an inter-gear teeth error component at each engine speed using the inter-gear teeth error coefficient; and means removing the inter-gear teeth error component from the post-removal integration angular velocity. Therefore, also in a non-uniform interval explosion engine or a single cylinder engine, when the integration value of the relative angular velocity is adopted as a misfire parameter, it is possible to remove an inter-gear teeth error from the misfire parameter without measuring an error for each inter-gear teeth of the crank pulser rotor.

(8) An engine vehicle of the present invention comprises means detecting an angular velocity at each crank angle from an inter-crank pulse time period; means calculating, based on the angular velocity at each crank angle, a relative angular velocity at each crank angle with respect to a reference angular velocity detected in proximity of a compression top dead center of an engine; means integrating the relative angular velocity within a given crank angle range to calculate an integration angular velocity; means removing an inertia torque component and a pumping torque component from the integration angular velocity to calculate a post-removal integration angular velocity; means calculating and learning an inter-gear teeth error coefficient from the post-removal integration angular velocity; means calculating an inter-gear teeth error component at each engine speed using the inter-gear teeth error coefficient; and means removing the inter-gear teeth error component from the post-removal integration angular velocity. Therefore, also in a non-uniform interval explosion engine or a single cylinder engine, when the integration value of the relative angular velocity is adopted as a misfire parameter, it is possible to remove an inter-gear teeth error from the misfire parameter without measuring an error for each inter-gear teeth of the crank pulser rotor, and misfire decision of high accuracy can be achieved.

Brief Description Of Drawings

[FIG. 1] FIG. 1 is a block diagram illustrating an engine vehicle, an inter-gear teeth error removal method and device for a crank pulser rotor and a device to which the present invention is applied.
[FIG. 2] FIG. 2 depicts a change of the angular velocity when steady operation is performed in a fuel cut state in the chassis.
[FIG. 3] FIG. 3 depicts a function of a 720-degree filter.
[FIG. 4] FIG. 4 depicts a function of a relative angular velocity calculation unit.
[FIG. 5] FIG. 5 depicts a function of an integration angular velocity calculation unit.
[FIG. 6] FIG. 6 depicts an example of the calculation result of an inertia torque determined by desktop calculation.
[FIG. 7] FIG. 7 depicts a function of an inertia torque component removal unit.
[FIG. 8] FIG. 8 depicts an example of a pumping torque component when the throttle value is fully closed.
[FIG. 9] FIG. 9 depicts a function of an inter-gear teeth error component removal unit.
[FIG. 10] FIG. 10 depicts a misfire detection method in which a relative angular velocity is determined from an angular velocity detected every time a crank pulse is generated and an integrated value of the relative angular velocity is determined as a misfire parameter (No misfire).
[FIG. 11] FIG. 11 depicts a misfire detection method in which a relative angular velocity is determined from an angular velocity detected every time a crank pulse is generated and an integrated value of the relative angular velocity is determined as a misfire parameter (Misfired).

Description of Embodiment

In the following, an embodiment of the present invention is described in detail with reference to the drawings. Here, an overview of a misfire detection method based on a crank angular velocity and the present invention is described first, and then an embodiment of the present invention is described in detail.

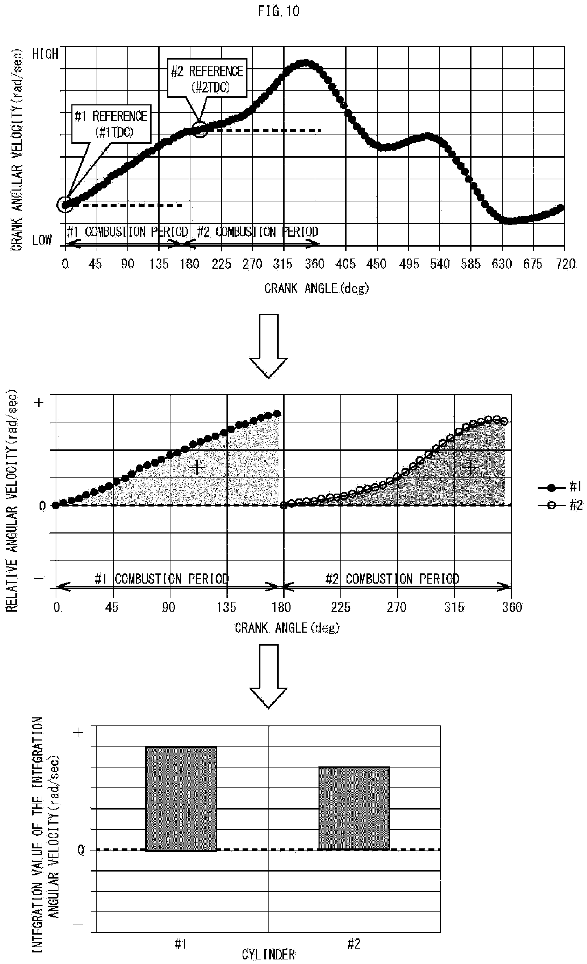

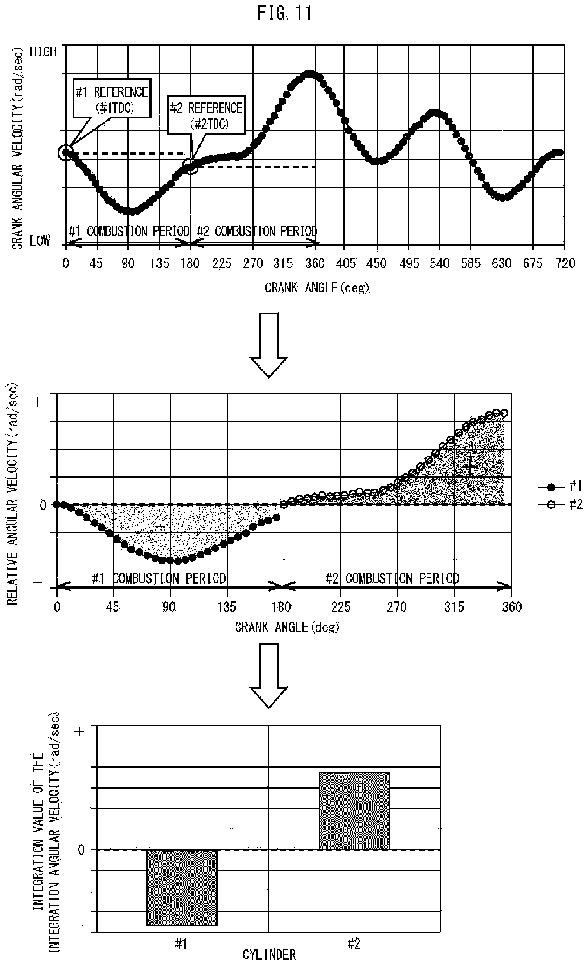

FIGS. 10 and 11 are views depicting an example of a misfire detection method in which a relative angular velocity is determined from an angular velocity detected every time a crank pulse is generated and an integrated value of the relative angular velocity (integrated angular velocity) is determined as a misfire parameter. The relative angular velocity is calculated by subtracting a reference angular velocity detected in the proximity of the compression top dead center of each cylinder of an engine from an angular velocity detected every time a crank pulse is generated.

Reference characters #1 and #2 in FIGS. 10 and 11 indicate cylinder identifiers for identifying two cylinders in accordance with an ignition order. FIG. 10 depicts a case in which combustion is proceeding normally in all cylinders of #1 and #2. FIG. 11 depicts a case in which a misfire occurs only in the cylinder of #1.

While the relative angular velocity increases if combustion is performed normally in a combustion stroke after the compression top dead center, the relative angular velocity decreases if a misfire occurs. The integration angular velocity obtained by integrating the relative angular velocity within a predetermined crank angle range indicates a positive value in the cylinder in which the combustion is performed normally but indicates a negative value in the cylinder in which a misfire occurs. Accordingly, the integration angular velocity can be utilized as a parameter for deciding a misfire cylinder.

However, the integration angular velocity includes an angular velocity component that fluctuates arising from, in addition to combustion torque, an inter-gear teeth error of a crank pulser rotor, noise caused by a dynamic change of a sensor gap, load torque, friction, inertia torque, pumping torque and so forth. Accordingly, in order to perform a misfire detection accurately, it is necessary to remove all of the fluctuation components from the integration angular velocity.

In regard to noise, load torque, friction and inertia torque from among the fluctuation components described above, a technique is known that removes them by statistical processing, engine control, desktop calculation or the like. However, in regard to pumping torque, an effective removal method is not established.

The pumping torque is torque generated by pumping operation of a piston in intake, compression, expansion and exhaust strokes of an engine. Accordingly, the pumping torque is a parameter different from a pumping loss representing energy loss that occurs in the intake stroke and the exhaust stroke of the engine.

In the present invention, for each of vehicle models that perform misfire detection, an environment is prepared in which a standard vehicle Mref including an ideal crank pulser rotor in which an inter-gear teeth error is substantially equal to zero is prepared in advance to eliminate an inter-gear teeth error component. Then, fluctuation components other than the pumping torque are removed by the suitable technique described above using the standard vehicle Mref to determine and extract an integration angular velocity at which the pumping torque component is dominant as a pumping torque component unique to the vehicle model and then the determined pumping torque component is set as data to an electronic control unit (ECU) of each mass sales vehicle.

As a result, in each mass sales car, it is possible to remove noise, load torque, friction and inertia torque by a suitable technique described hereinabove and remove pumping torque on the basis of data set to the ECU. In short, it is possible to remove fluctuation components other than the inter-gear teeth error of the crank pulser rotor. In regard to the inter-gear teeth error of the crank pulser rotor, it is possible to be removed by calculating and learning an inter-gear teeth error coefficient on the basis of the integration angular velocity measured in a state in which all of the other fluctuation components than the inter-gear teeth error are excluded in advance.

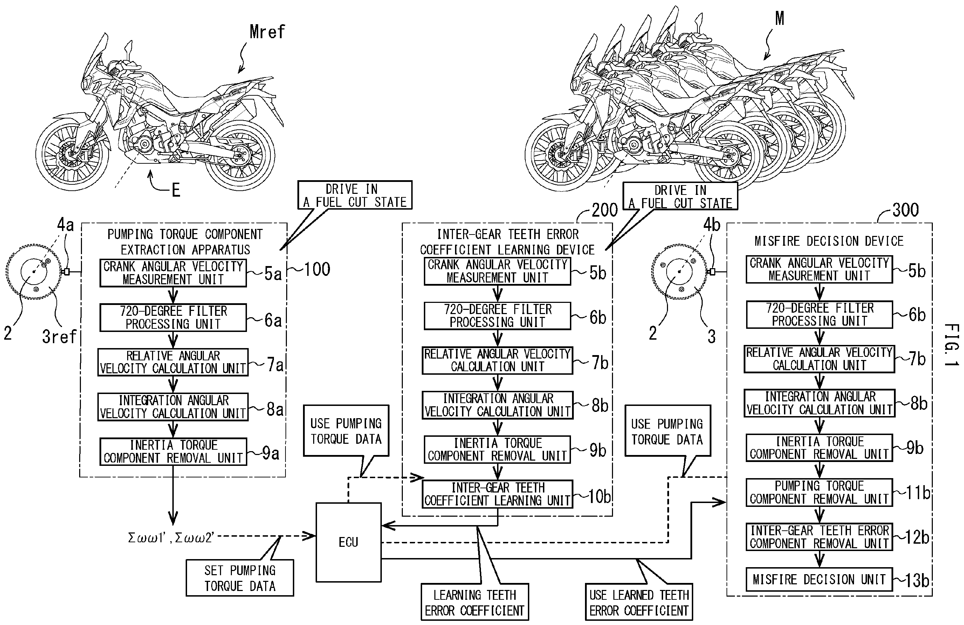

Now, an embodiment of the present invention is described in detail with reference to the drawings. FIG. 1 is a block diagram illustrating an engine vehicle, an inter-gear teeth error removal method for a crank pulser rotor and a device to which the present invention is applied. Here, description is given taking a motorcycle in which a 4-cycle 2-cylinder non-uniform interval explosion engine (explosion interval: 180 degrees 540 degrees) is incorporated as an example.

A standard vehicle Mref includes a single cylinder engine E incorporated therein, is equipped with an ideal crank pulser rotor 3ref mounted on a crankshaft 2 of the single cylinder engine E and having a substantially zero inter-gear teeth error, and has a pumping torque component extraction apparatus 100.

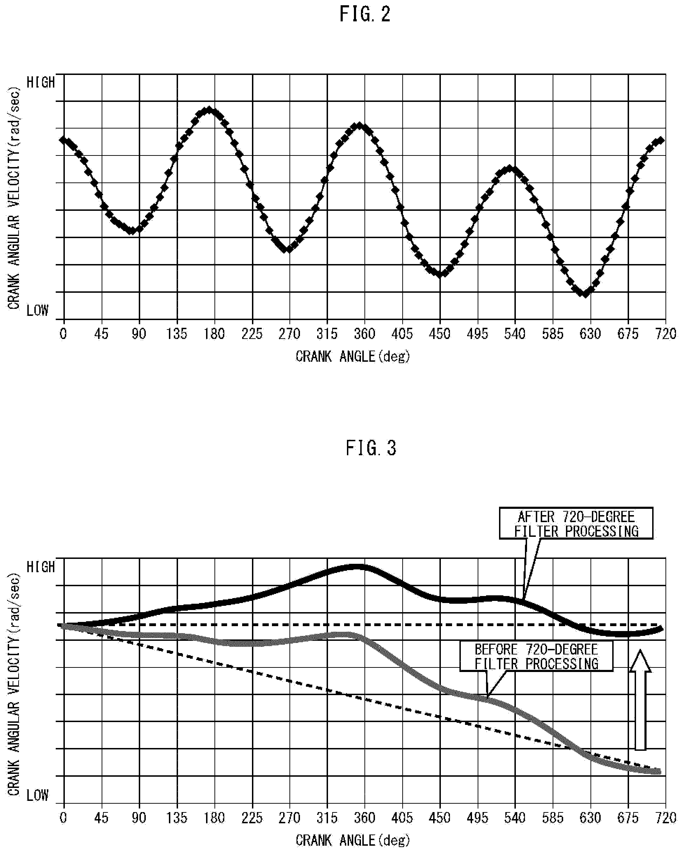

In the pumping torque component extraction apparatus 100, a crank angular velocity measurement unit 5a measures the angular velocity in a state in which combustion torque is substantially not generated. Therefore, the inter-pulse time period of the ideal crank pulser rotor 3ref is measured in a fuel cut state by a crank pulser sensor 4a to calculate an angular velocity at each crank angle. A well-known moving averaging process or the like is applied to the angular velocity at each crank angle to remove noise components. FIG. 2 depicts a change of the angular velocity when steady operation is performed in a fuel cut state in the chassis.

A 720-degree filter processing unit 6a cancels a linear change within one cycle period targeting a result of calculation of an angular velocity $\omega$ and extracts a fluctuation component whose cycle is comparatively short. Consequently, an angular velocity fluctuation component arising from load torque applied from a tire or an auxiliary machine of the vehicle driven by the engine or arising from friction of a sliding part of the engine can be removed.

FIG. 3 depicts an example in which a 720-degree filter is applied to a cycle within which the velocity is decreased by load torque although combustion torque is generated. Since extraction of a pumping torque component is performed in steady operation in the chassis, the linear change of the angular velocity within one cycle is very little.

Since fluctuation components are removed by the filter process described above in a state in which combustion torque is substantially zero, substantially only fluctuation components by inertia torque and pumping torque are included in the obtained angular velocity co.

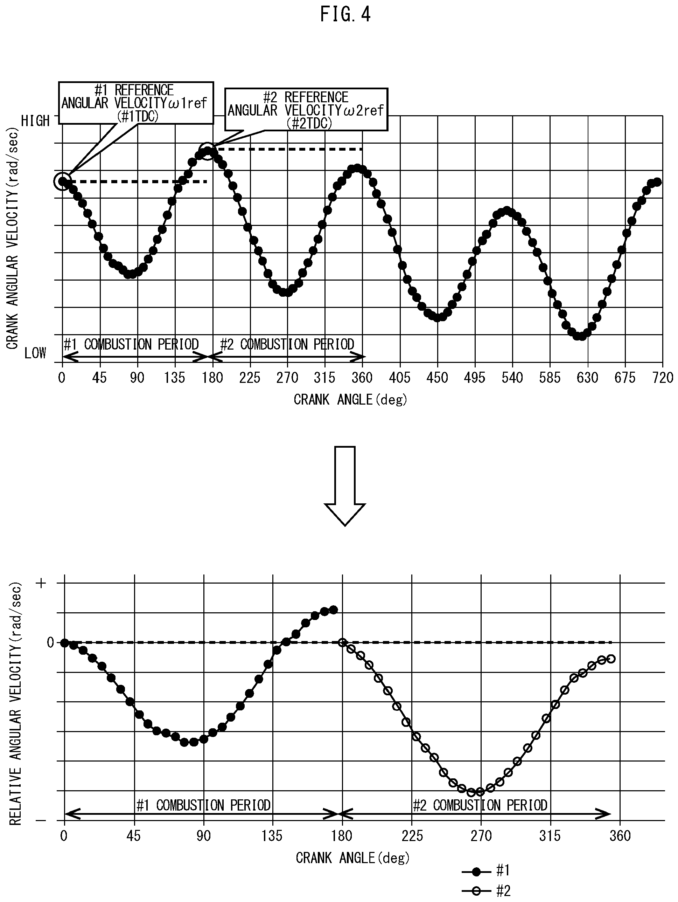

A relative angular velocity calculation unit 7a calculates, using the angular velocity ω measured in the proximity of the compression top dead center (crank angle 0 degree) as a reference angular velocity colref as depicted in FIG. 4, the difference between an angular velocity ω1_i measured at each crank angle i within a crank angle range of 180 degrees from the compression top dead center and the reference angular velocity colref as a first relative angular velocity ωω1_i (= ω1_i - colref).

Similarly, using an angular velocity ω measured in the proximity of the compression top dead center (#2TDC: crank angle 180 degrees) of the second cylinder (#2) as the reference angular velocity ω2ref, the difference between the angular velocity co2j measured at each crank angle j within the crank angle range of 180 degrees from the #2TDC and the reference angular velocity ωref is determined as a second cylinder relative angular velocity ωω2_j (= ω2_j-ω2ref).

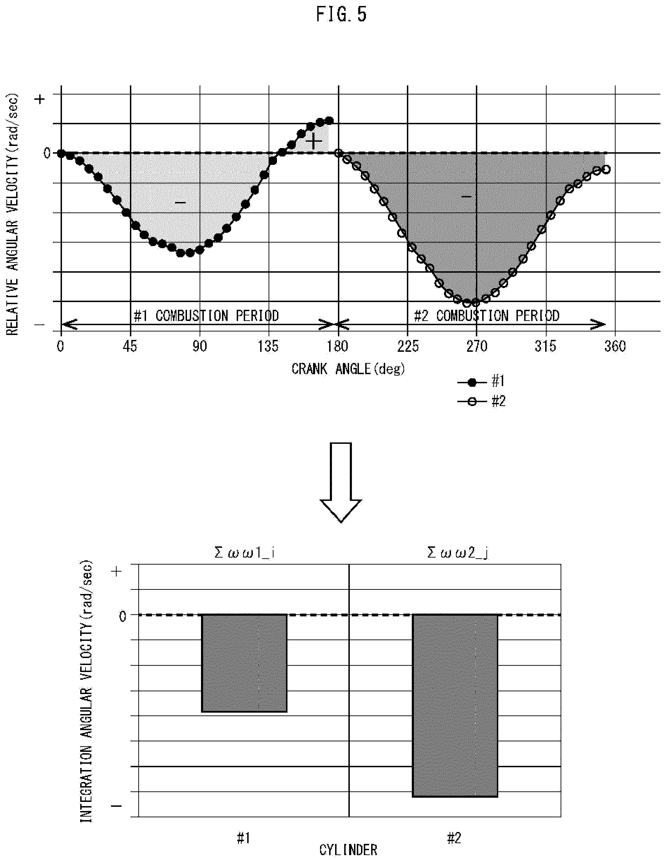

As depicted in FIG. 5, an integration angular velocity calculation unit 8a integrates the first and second relative angular velocities ωω1_i and ωω2_j to calculate a first integration angular velocity $\Sigma\omega\omega1\_i$ and a second integration angular velocity $\Sigma\omega\omega2\_j$, respectively.

An inertia torque component removal unit 9a removes inertia torque components determined by desktop calculation from the first and second integration angular velocities $\Sigma\omega\omega1\_i$ and $\Sigma\omega\omega2\_j$ to calculate a first post-removal integration angular velocity $\Sigma\omega\omega1'\_i$ and a second post-removal integration angular velocity $\Sigma\omega\omega2'\_j$.

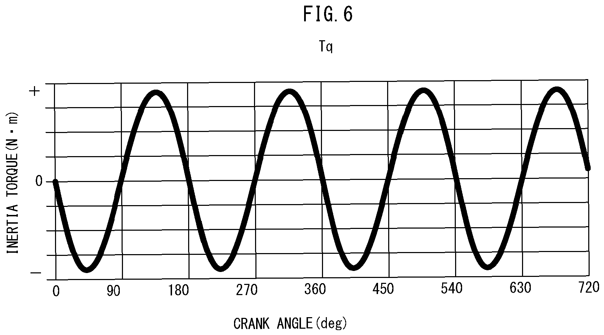

The inertia torque Tq1 by a single cylinder can be determined on the basis of the connecting rod length L, crank radius R, offset e, angular velocity ω of the crankshaft and total mass m of the piston and the connecting rod. On the other hand, the present embodiment supposes a non-uniform interval explosion two-cylinder engine, and the synthetic inertia torque Tq that can be determined by shifting the phase of the inertia torque Tq1 by a single cylinder and adding the inertia torques for the two cylinders becomes such as depicted in FIG. 6.

The inertia torque Tq can be approximated, representing the inertial mass of the piston, connecting rod, crank and so forth as I, by a motion equation of rotation of the following expression.

$$Tq = I \times (d\omega/dt) \ ... \ (1)$$

What is to be determined in the present embodiment is an angular velocity change dω by inertia torque Tq and is determined by transforming the expression (1) above into the following expression (2).

$$T\omega = Tq \times (dt/I) \ ... \ (2)$$

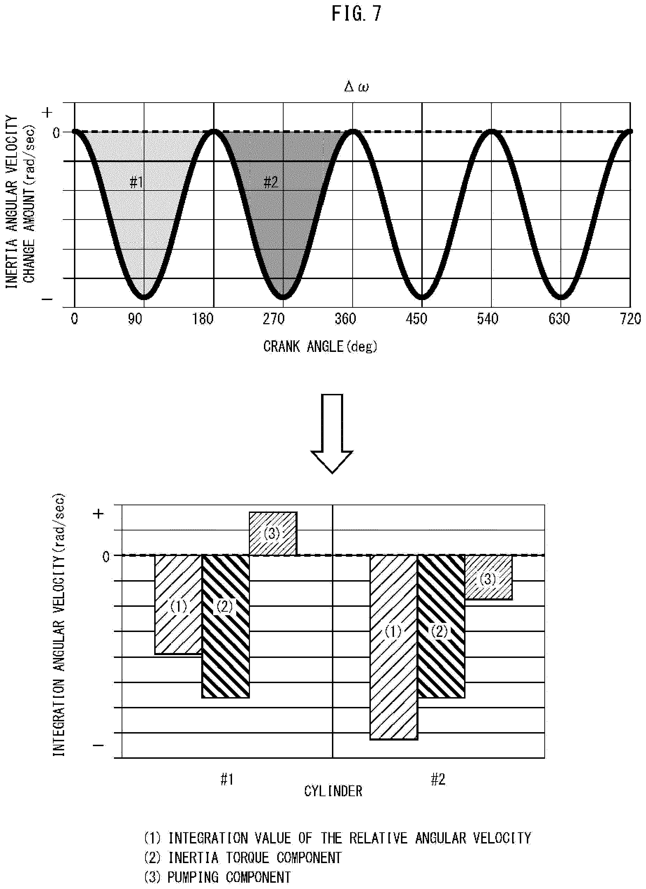

In particular, the angular velocity change amount dω by inertia torque can be determined using inertia torque Tq generated at a certain engine speed, inertial mass I and required time period dt required for rotation by a unit angle at the certain engine speed, and becomes such, for example, as depicted in FIG. 7.

In the present embodiment, since a value obtained by integrating a relative angular velocity with reference to the compression top dead center is required, it is sufficient if an integrated value of a relative value dω' with reference to a value of the compression top dead center of the angular velocity change amount dω by inertia torque is determined. In regard to the angular velocity change amount dω' described above, it is necessary to perform a process same as that of the noise removal technique applied to the angular velocity at each crank angle. The inertia torque component at each engine speed can be determined by determining an integration value of the angular velocity change amount dω' in a unit velocity and setting data to the pumping torque extraction device 100 and then multiplying this value by the reference angular velocity.

In the present embodiment, if the first and second post-removal integration angular velocities $\Sigma\omega\omega1'\_i$ and $\Sigma\omega\omega2'\_j$ are determined in such a manner as described above, then they are extracted as a pumping torque component in the expansion stroke and a pumping torque component in the intake stroke, respectively. FIG. 7 depicts an example in which an initial torque component (2) is removed from an integration value (1) of the relative angular velocity to extract a pumping torque component (3).

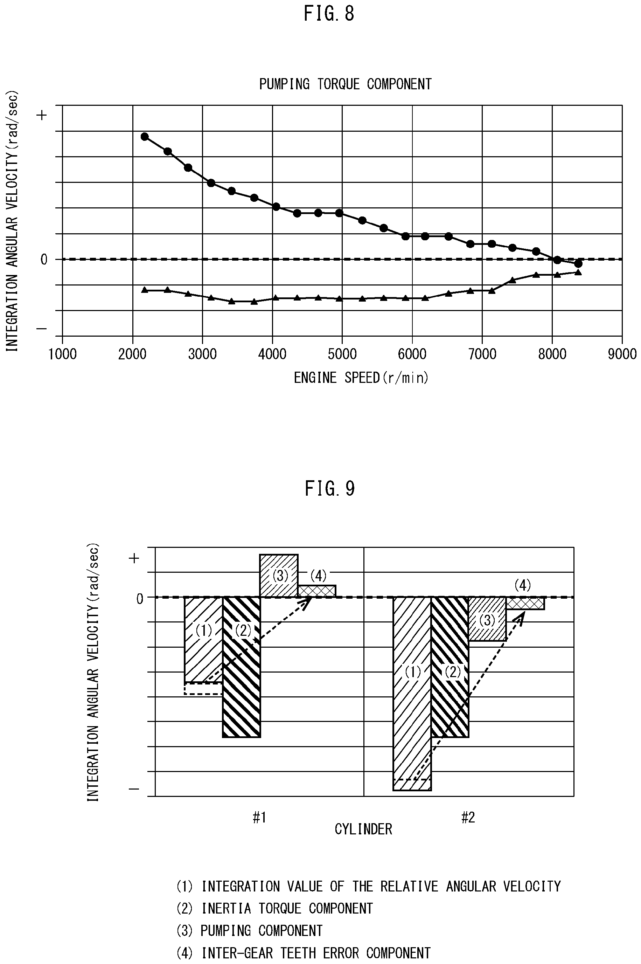

The pumping torque component on cylinders of #1 and #2 relies upon the engine speed and the throttle valve opening, and the pumping torque component when the throttle value is fully closed is such, for example, as depicted in FIG. 8. Extraction of the pumping torque component is determined in the form of a map, for example, by the engine speed and the intake manifold pressure using the engine speed as a parameter.

Since the pumping torque component determined in such a manner as described above is common to vehicles if they are of a same model, the pumping torque component is set as data to the ECU of mass production vehicles M whose model is same and is used for correction of a misfire parameter.

Referring back to FIG. 1, each mass production car M includes an inter-gear teeth error coefficient learning device 200 and calculates and learns an inter-gear teeth error coefficient, which is used to determine an inter-gear teeth error component, setting it as one condition that it is in a fuel cut state.

In the inter-gear teeth error coefficient learning device 200, a crank angular velocity measurement unit 5b determines an angular velocity $\omega$. A 720-degree filter processing unit 6b removes angular velocity fluctuation components arising from load torque and friction. A relative angular velocity calculation unit 7b calculates first and second cylinder relative angular velocities $\omega\omega1\_i$ and $\omega\omega2\_j$. An integration angular velocity calculation unit 8b calculates first and second cylinder integration angular velocities $\sum\omega\omega1\_i$ and $\sum\omega\omega2\_j$. An inertia torque component removal unit 9b calculates first and second cylinder post-removal integration angular velocities $\sum\omega\omega1'\_i$ and $\sum\omega\omega2'\_j$ in each of which the inertia torque component has been removed.

Since an inter-gear teeth error is included in the crank pulser rotor 3 of the mass sales car M, each of the first and second cylinder post-removal integration angular velocities $\sum\omega\omega1'\_i$ and $\sum\omega\omega2'\_j$ includes an inter-gear teeth error component in addition to a pumping torque component.

A inter-gear teeth coefficient learning unit 10b determines first and second cylinder inter-gear teeth error components $\sum\omega\omega1''\_i$ and $\sum\omega\omega2''\_j$ by removing pumping torque components of the individual cylinders from the first and second cylinder post-removal integration angular velocities $\sum\omega\omega1'\_i$ and $\sum\omega\omega2'\_j$ using data of pumping torque components registered in the ECU using the standard vehicle Mref. FIG. 9 depicts an example in which an inertia torque component (2) and a pumping torque component (3) are removed from an integration value (1) of the relative angular velocity to extract an inter-gear teeth error component (4).

Then, the first and second cylinder inter-gear teeth error components $\sum\omega\omega1''\_i$ and $\sum\omega\omega2''\_j$ are divided by the first cylinder reference angular velocity $\omega$ref1 and the second cylinder reference angular velocity $\omega$ref2 to calculate a first inter-gear teeth error coefficient Kpul1 and a second inter-gear teeth error coefficient Kpul2, respectively, which are then stored as results of learning of the inter-gear teeth error coefficient Kpul into the ECU.

Referring back to FIG. 1, each mass sales car M includes a misfire decision device 300 and calculates a misfire parameter upon actual running to decide whether or not there is a misfire.

In the misfire decision device 300, the crank angular velocity measurement unit 5b determines an angular velocity $\omega$. The 720-degree filter processing unit 6b removes angular velocity fluctuation components arising from load torque and friction. The relative angular velocity calculation unit 7b calculates first and second cylinder relative angular velocities $\omega\omega1\_i$ and $\omega\omega2\_j$. The integration angular velocity calculation unit 8b calculates first and second cylinder integration angular velocities $\sum\omega\omega1\_i$ and $\sum\omega\omega2\_j$. The inertia torque component removal unit 9b removes an inertia torque component to calculate first and second cylinder post-removal integra-

tion angular velocities $\sum\omega\omega1'\_i$ and $\sum\omega\omega2'\_j$.

A pumping torque component removal unit 11b removes pumping torque components from the first and second cylinder post-removal integration angular velocities $\sum\omega\omega1'\_i$ and $\sum\omega\omega2'\_j$ using data of the pumping torque components set in the ECU using the standard vehicle Mref to calculate first and second cylinder post-removal integration angular velocities $\sum\omega\omega1''\_i$ and $\sum\omega\omega2''\_j$.

An inter-gear teeth error component removal unit 12b multiplies the first and second cylinder inter-gear teeth error coefficients Kpul1 and Kpul2 learned by the inter-gear teeth error coefficient learning device 200 and stored in the ECU by the first cylinder reference angular velocity corefl and the second cylinder reference angular velocity $\omega$ref2 to calculate first and second cylinder inter-gear teeth error components, respectively. Then, the first and second cylinder inter-gear teeth error components are subtracted from the first and second cylinder post-removal integration angular velocities $\sum\omega\omega1''\_i$ and $\sum\omega\omega2''\_j$ to calculate misfire parameters for the individual cylinders. A misfire decision unit 13b decides whether or not there is a misfire on the basis of the misfire parameters.

According to the present embodiment, in a non-uniform interval explosion engine or a single cylinder engine, it becomes possible to remove inter-gear teeth errors from a misfire parameter without measuring an error for each inter-gear teeth of the pulser rotor, and misfire decision of high accuracy based on the misfire parameter becomes possible.

It is to be noted that, although it is described in the foregoing description of the embodiment that an inertia torque component is removed from an integration angular velocity, the present invention is not limited only to this, and if an inertia torque component can be removed from an integration angular velocity finally, then a relationship between the crank angle and the angular velocity component arising from inertia torque may be determined in advance such that, from an angular velocity before it is integrated, an inertia torque component corresponding to the crank angle is removed.

Further, in the foregoing description of the embodiment, it is described that a relative angular velocity and an integration angular velocity are determined on the basis of a reference angular velocity and an inter-gear teeth error coefficient is determined by dividing a post-removal integration angular velocity by a reference angular velocity detected in the proximity of the compression top dead center of the engine. The invention is defined by the appended claims. Not forming part of the invention, a relative angular velocity and its integration angular velocity may be determined on the basis of an average angular velocity or engine speed of a cycle for evaluating a misfire or a value corresponding to any of them and then divided by the average angular velocity, engine speed or the like.

[Explanation of sign]

2...crankshaft, 3...crank pulser rotor, 3ref...ideal crank pulser rotor, 4...crank pulser sensor, 5a, 5b...crank angular velocity measurement unit, 6a, 6b...720-degree filter processing unit, 7a, 7b...relative angular velocity calculation unit, 8a, 8b...integration angular velocity calculation unit, 9a, 9b...inertia torque component removal unit, 10b...inter-gear teeth coefficient learning unit, 11b...pumping torque component removal unit, 12b...inter-gear teeth error component removal unit, 13b...misfire decision unit, 100...pumping torque component extraction apparatus, 200...inter-gear teeth error coefficient learning device, 300...misfire decision device

**Claims**

1. An inter-gear teeth error removal device for a crank pulser rotor, comprising:

    means (4b, 5b) detecting an angular velocity at each crank angle from an inter-crank pulse time period;
    means (7b) calculating, based on the angular velocity at each crank angle, a relative angular velocity at each crank angle with respect to a reference angular velocity detected in proximity of a compression top dead center of an engine;
    means (8b) integrating the relative angular velocity within a given crank angle range to calculate an integration angular velocity;
    means (9b, 11b) removing an inertia torque component and a pumping torque component from the integration angular velocity or the angular velocity before integration to calculate a post-removal integration angular velocity;
    means (10b) calculating and learning an inter-gear teeth error coefficient by dividing the post-removal integration angular velocity by the reference angular velocity;
    means (12b) calculating an inter-gear teeth error component at each engine speed using the inter-gear teeth error coefficient; and
    means (12b) removing the inter-gear teeth error component from the post-removal integration angular velocity.

2. The inter-gear teeth error removal device for a crank pulser rotor according to claim 1, wherein the means detecting an angular velocity detects an angular velocity in a state in which combustion torque is not substantially generated.

3. The inter-gear teeth error removal device for a crank pulser rotor according to any one of claim 1 or 2, wherein the means calculating an inter-gear teeth error component calculates an inter-gear teeth error component at each engine speed by multiplying the inter-gear teeth error coefficient by the reference angular velocity.

4. The inter-gear teeth error removal device for a crank pulser rotor according to any one of claims 1 to 3, further comprising means (6b) removing, from a detection result of the angular velocity, a first angular velocity fluctuation component that possibly occurs with a vehicle-carried engine, wherein the means calculating a relative angular velocity calculates a relative angular velocity targeting an angular velocity from which the first angular velocity fluctuation component is removed, and wherein, preferably, the first angular velocity fluctuation component is an angular velocity fluctuation component arising from load torque applied from a tire or an auxiliary machine of a vehicle driven by the engine and friction of a sliding part of the engine.

5. The inter-gear teeth error removal device for a crank pulser rotor according to any one of claims 1 to 4, wherein the means calculating a post-removal integration angular velocity removes an inertia torque component and a pumping torque component from the integration angular velocity.

6. The inter-gear teeth error removal device for a crank pulser rotor according to any one of claims 1 to 5, wherein the engine is a non-uniform interval explosion engine or a single cylinder engine.

7. An inter-gear teeth error removal method for a crank pulser rotor, comprising:

    detecting an angular velocity at each crank angle from an inter-crank pulse time period;
    calculating, based on the angular velocity at each crank angle, a relative angular velocity at each crank angle with respect to a reference angular velocity detected in proximity of a compression top dead center of an engine;
    integrating the relative angular velocity within a given crank angle range to calculate an integration angular velocity;
    removing an inertia torque component and a pumping torque component from the integration angular velocity to calculate a post-removal integration angular velocity;
    calculating and learning an inter-gear teeth error coefficient by dividing the post-removal integration angular velocity by the reference angular velocity;
    calculating an inter-gear teeth error component at each engine speed using the inter-gear teeth error coefficient; and
    removing the inter-gear teeth error component from the post-removal integration angular velocity.

8. An inter-gear teeth error removal method for a crank pulser rotor according to claim 7, wherein an angular velocity is detected in a state in which combustion torque is not substantially generated.

9. The inter-gear teeth error removal method for a crank pulser rotor according to any one of claim 7 or 8, wherein an inter-gear teeth error component at each engine speed is calculated by multiplying the inter-gear teeth error coefficient by the reference angular velocity.

10. The inter-gear teeth error removal method for a crank pulser rotor according to any one of claims 7 to 9, wherein a first angular velocity fluctuation component that possibly occurs with a vehicle-carried engine is removed from a detection result of the angular velocity, wherein a relative angular velocity is calculated targeting an angular velocity from which the first angular velocity fluctuation component is removed, and wherein, preferably, the first angular velocity fluctuation component is an angular velocity fluctuation component arising from load torque applied from a tire or an auxiliary machine of a vehicle driven by the engine and friction of a sliding part of the engine.

11. The inter-gear teeth error removal method for a crank pulser rotor according to any one of claims 7 to 10, wherein an inertia torque component and a pumping torque component are removed from the integration angular velocity.

12. The inter-gear teeth error removal method for a crank pulser rotor according to any one of claims 7 to 11, wherein the engine is a non-uniform interval explosion engine or a single cylinder engine.

13. The inter-gear teeth error removal method for a crank pulser rotor according to any one of claims 7 to 12, comprising:

detecting an angular velocity at each crank angle of a standard vehicle that includes an ideal crank pulser rotor whose inter-gear teeth error is substantially zero;
calculating a relative angular velocity at each crank angle with respect to a reference angular velocity detected in the proximity of the compression top dead center of the engine on a basis of the angular velocity at each crank angle;
integrating the relative angular velocity within a given crank angle range to calculate an integration angular velocity;
removing an inertia torque component from the integration angular velocity to determine a pumping torque component; and
setting data to an electronic control unit (ECU) and using the data as the pumping torque component.

14. An engine vehicle, comprising:

means detecting an angular velocity at each crank angle from an inter-crank pulse time period;
means calculating, based on the angular velocity at each crank angle, a relative angular velocity at each crank angle with respect to a reference angular velocity detected in proximity of a compression top dead center of an engine;
means integrating the relative angular velocity within a given crank angle range to calculate an integration angular velocity;
means removing an inertia torque component and a pumping torque component from the integration angular velocity to calculate a post-removal integration angular velocity;
means calculating and learning an inter-gear teeth error coefficient from the post-removal integration angular velocity;
means calculating an inter-gear teeth error component at each engine speed using the inter-gear teeth error coefficient; and
means removing the inter-gear teeth error component from the post-removal integration angular velocity, wherein
the post-removal integration angular velocity calculated based on an angular velocity detected in a state in which combustion torque is substantially not generated is set as an inter-gear teeth error component;
the inter-gear teeth error component is divided by the reference angular velocity to calculate and learn an inter-gear teeth error coefficient; and
an inter-gear teeth error component at each engine speed is determined from a product of the inter-gear teeth error coefficient and the reference angular velocity.

15. The engine vehicle according to claim 14, wherein a value obtained by removing the inter-gear teeth error component from the post-removal integration angular velocity is used as a misfire parameter to perform misfire decision.

**Patentansprüche**

1. Zwischenzahnrad-Verzahnungsfehler-Beseitigungsvorrichtung für einen Kurbelpulsgeber-Rotor, welche aufweist:

ein Mittel (4b, 5b) zum Detektieren einer Winkelgeschwindigkeit bei jedem Kurbelwinkel aus einer Zwischenkurbelpuls-Zeitspanne;

ein Mittel (7b) zum Berechnen, basierend auf der Winkelgeschwindigkeit bei jedem Kurbelwinkel, einer relativen Winkelgeschwindigkeit bei jedem Kurbelwinkel in Bezug auf eine Referenz-Winkelgeschwindigkeit, die in der Nähe eines oberen Kompressionstotpunks eines Motors detektiert wird;

ein Mittel (8b) zum Integrieren der relativen Winkelgeschwindigkeit in einem gegebenen Kurbelwinkelbereich, um eine integrierte Winkelgeschwindigkeit zu berechnen;

ein Mittel (9b, 11b) zum Beseitigen einer Trägheitsdrehmoment-Komponente und einer Pumpdrehmoment-Komponente aus der integrierten Winkelgeschwindigkeit oder der Winkelgeschwindigkeit vor dem Integrieren, um eine integrierte Nach-Beseitigungs-Winkelgeschwindigkeit zu berechnen;

ein Mittel (10b) zum Berechnen und Lernen eines Zwischenzahnrad-Verzahnungsfehler-Koeffizienten durch Dividieren der integrierten Nach-Beseitigungs-Winkelgeschwindigkeit durch die Referenz-Winkelgeschwindigkeit;

ein Mittel (12b) zum Berechnen einer Zwischenzahnrad-Verzahnungsfehler-Komponente bei jeder Motordrehzahl unter Verwendung des Zwischenzahnrad-Verzahnungsfehler-Koeffizienten; und

ein Mittel (12b) zum Beseitigen der Zwischenzahnrad-Verzahnungsfehler-Komponente aus der integrierten Nach-Beseitigungs-Winkelgeschwindigkeit.

2. Die Zwischenzahnrad-Verzahnungsfehler-Beseitigungsvorrichtung für einen Kurbelpulsgeber-Rotor nach Anspruch 1, wobei das Mittel zum Detektieren einer Winkelgeschwindigkeit eine Winkelgeschwindigkeit in einem Zustand detektiert, in dem im Wesentlichen kein Verbrennungsdrehmoment erzeugt wird.

3. Die Zwischenzahnrad-Verzahnungsfehler-Beseitigungsvorrichtung für einen Kurbelpulsgeber-Rotor nach einem der Ansprüche 1 oder 2, wobei das Mittel zur Berechnung einer Zwischenzahnrad-Verzahnungsfehler-Komponente eine Zwischenzahnrad-Verzahnungsfehler-Komponente bei jeder Motordrehzahl berechnet, indem es den Zwischenzahnrad-Verzahnungsfehler-Koeffizienten mit der Referenz-Winkelgeschwindigkeit multipliziert.

4. Die Zwischenzahnrad-Verzahnungsfehler-Beseitigungsvorrichtung für einen Kurbelpulsgeber-Rotor nach einem der Ansprüche 1 bis 3, die ferner ein Mittel (6b) aufweist, um aus einem Detektionsergebnis der Winkelgeschwindigkeit eine erste Winkelgeschwindigkeits-Fluktuationskomponente zu beseitigen, die bei einem an einem Fahrzeug angebrachten Motor möglicherweise auftritt, wobei das Mittel zur Berechnung einer relativen Winkelgeschwindigkeit eine relative Winkelgeschwindigkeit berechnet, die auf eine Winkelgeschwindigkeit zielt, aus der die erste Winkelgeschwindigkeits-Fluktuationskomponente beseitigt ist, und wobei bevorzugt die erste Winkelgeschwindigkeits-Fluktuationskomponente eine Winkelgeschwindigkeits-Fluktuationskomponente, die aus einem Lastdrehmoment, das von einem Reifen oder einer Hilfsmaschine eines von dem Motor angetriebenen Fahrzeugs einwirkt, und Reibung eines Gleitteils des Motors herrührt.

5. Die Zwischenzahnrad-Verzahnungsfehler-Beseitigungsvorrichtung für einen Kurbelpulsgeber-Rotor nach einem der Ansprüche 1 bis 4, wobei das Mittel zur Berechnung der integrierten Nach-Beseitigungs-Winkelgeschwindigkeit eine Trägheitsdrehmoment-Komponente und eine Pumpdrehmoment-Komponente aus der integrierten Winkelgeschwindigkeit beseitigt.

6. Die Zwischenzahnrad-Verzahnungsfehler-Beseitigungsvorrichtung für einen Kurbelpulsgeber-Rotor nach einem der Ansprüche 1 bis 5, wobei der Motor ein solcher mit ungleichmäßigem Zündintervall oder Einzylindermotor ist.

7. Zwischenzahnrad-Verzahnungsfehler-Beseitigungsverfahren für einen Kurbelpulsgeber-Rotor, welches aufweist:

Detektieren einer Winkelgeschwindigkeit bei jedem Kurbelwinkel aus einer Zwischenkurbelpuls-Zeitspanne;

Berechnen, basierend auf der Winkelgeschwindigkeit bei jedem Kurbelwinkel, einer relativen Winkelgeschwindigkeit bei jedem Kurbelwinkel in Bezug auf eine Referenz-Winkelgeschwindigkeit, die in der Nähe eines oberen Kompressionstotpunks eines Motors detektiert wird;

Integrieren der relativen Winkelgeschwindigkeit in einem gegebenen Kurbelwinkelbereich, um eine integrierte Winkelgeschwindigkeit zu berechnen;

Beseitigen einer Trägheitsdrehmoment-Komponente und einer Pumpdrehmoment-Komponente aus der integrierten Winkelgeschwindigkeit, um eine integrierte Nach-Beseitigungs-Winkelgeschwindigkeit zu berechnen;

Berechnen und Lernen eines Zwischenzahnrad-Verzahnungsfehler-Koeffizienten durch Dividieren der integrierten Nach-Beseitigungs-Winkelgeschwindigkeit durch die Referenz-Winkelgeschwindigkeit;
Berechnen einer Zwischenzahnrad-Verzahnungsfehler-Komponente bei jeder Motordrehzahl unter Verwendung des Zwischenzahnrad-Verzahnungsfehler-Koeffizienten; und
Beseitigen der Zwischenzahnrad-Verzahnungsfehler-Komponente aus der integrierten Nach-Beseitigungs-Winkelgeschwindigkeit.

8.  Das Zwischenzahnrad-Verzahnungsfehler-Beseitigungsverfahren für einen Kurbelpulsgeber-Rotor nach Anspruch 7,
wobei eine Winkelgeschwindigkeit in einem Zustand detektiert wird, in der im Wesentlichen kein Verbrennungsdrehmoment erzeugt wird.

9.  Das Zwischenzahnrad-Verzahnungsfehler-Beseitigungsverfahren für einen Kurbelpulsgeber-Rotor nach einem der Ansprüche 7 oder 8, wobei eine Zwischenzahnrad-Verzahnungsfehler-Komponente bei jeder Motordrehzahl durch Multiplizieren des Zwischenzahnrad-Verzahnungsfehler-Koeffizienten mit der Referenz-Winkelgeschwindigkeit berechnet wird.

10. Das Zwischenzahnrad-Verzahnungsfehler-Beseitigungsverfahren für einen Kurbelpulsgeber-Rotor nach einem der Ansprüche 7 bis 9,
wobei eine erste Winkelgeschwindigkeits-Fluktuationskomponente, die bei einem an einem Fahrzeug angebrachten Motor möglicherweise auftritt, aus einem Detektionsergebnis der Winkelgeschwindigkeit beseitigt wird, wobei eine relative Winkelgeschwindigkeit mit dem Ziel einer Winkelgeschwindigkeit berechnet wird, aus der die erste Winkelgeschwindigkeits-Fluktuationskomponente beseitigt ist, und
wobei bevorzugt die erste Winkelgeschwindigkeits-Fluktuationskomponente eine Winkelgeschwindigkeits-Fluktuationskomponente ist, die aus einem Lastdrehmoment, das von einem Reifen oder einer Hilfsmaschine eines von dem Motor angetriebenen Fahrzeugs einwirkt, und Reibung eines Gleitteils des Motors herrührt.

11. Das Zwischenzahnrad-Verzahnungsfehler-Beseitigungsverfahren für einen Kurbelpulsgeber-Rotor nach einem der Ansprüche 7 bis 10,
wobei eine Trägheitsdrehkomponente und eine Pumpdrehmomentkomponente aus der integrierten Winkelgeschwindigkeits-Komponente beseitigt werden.

12. Das Zwischenzahnrad-Verzahnungsfehler-Beseitigungsverfahren für einen Kurbelpulsgeber-Rotor nach einem der Ansprüche 7 bis 11,
wobei der Motor ein solcher mit ungleichmäßigem Zündintervall oder Einzylindermotor ist.

13. Das Zwischenzahnrad-Verzahnungsfehler-Beseitigungsverfahren für einen Kurbelpulsgeber-Rotor nach einem der Ansprüche 7 bis 12, welches aufweist:

Detektieren einer Winkelgeschwindigkeit bei jedem Kurbelwinkel eines Standardfahrzeugs, das einen idealen Kurbelpulsgeber-Rotor enthält, dessen Zwischenzahnrad-Verzahnungsfehler im Wesentlichen Null ist;
Berechnen einer relativen Winkelgeschwindigkeit bei jedem Kurbelpulsgeber in Bezug auf eine Referenz-Winkelgeschwindigkeit, die in der Nähe des oberen Kompressionstotpunks des Motors detektiert wird, auf Basis der Winkelgeschwindigkeit jedes Kurbelwinkels;
Integrieren der relativen Winkelgeschwindigkeit in einem gegebenen Kurbelwinkelbereich, um eine integrierte Winkelgeschwindigkeit zu berechnen;
Beseitigen einer Trägheitsdrehmoment-Komponente aus der integrierten Winkelgeschwindigkeit, um eine Pumpdrehmoment-Komponente zu bestimmen;
Setzen von Daten auf eine elektronische Steuereinheit (ECU) und
Verwenden der Daten als die Pumpdrehmoment-Komponente.

14. Motorfahrzeug, welches aufweist:

ein Mittel zum Detektieren einer Winkelgeschwindigkeit bei jedem Kurbelwinkel aus einer Zwischenkurbelpuls-Zeitspanne;
ein Mittel zum Berechnen, basierend auf der Winkelgeschwindigkeit bei jedem Kurbelwinkel, einer relativen Winkelgeschwindigkeit bei jedem Kurbelwinkel in Bezug auf eine Referenz-Winkelgeschwindigkeit, die in der Nähe eines oberen Kompressionstotpunks eines Motors detektiert wird;
ein Mittel zum Integrieren der relativen Winkelgeschwindigkeit in einem gegebenen Kurbelwinkelbereich, um eine integrierte Winkelgeschwindigkeit zu berechnen;
ein Mittel zum Beseitigen einer Trägheitsdrehmoment-Komponente und
einer Pumpdrehmoment-Komponente aus der integrierten Winkelgeschwindigkeit, um eine integrierte Nach-Beseitigungs-Winkelgeschwindigkeit zu berechnen;
ein Mittel zum Berechnen und Lernen eines Zwischenzahnrad-Verzahnungsfehler-Koeffizienten von der integrierten Nach-Beseitigungs-Winkelgeschwindigkeit;
ein Mittel zum Berechnen einer Zwischenzahnrad-Verzahnungsfehler-Komponente bei jeder Motordrehzahl unter Verwendung des Zwischenzahnrad-Verzahnungsfehler-Koeffizienten; und

ein Mittel zum Beseitigen der Zwischenzahnrad-Verzahnungsfehler-Komponente aus der integrierten Nach-Beseitigungs-Winkelgeschwindigkeit, wobei

die integrierte Nach-Beseitigungs-Winkelgeschwindigkeit, die basierend auf einer Winkelgeschwindigkeit berechnet wird, die in einem Zustand detektiert wird, in dem im Wesentlichen kein Verbrennungsdrehmoment erzeugt wird, als Zwischenzahnrad-Verzahnungsfehler-Komponente gesetzt wird;

die Zwischenzahnrad-Verzahnungsfehler-Komponente durch die Referenz-Winkelgeschwindigkeit dividiert wird, um einen Zwischenzahnrad-Verzahnungsfehler-Koeffizienten zu berechnen und zu erlernen; und

eine Zwischenzahnrad-Verzahnungsfehler-Komponente bei jeder Motordrehzahl aus einem Produkt des Zwischenzahnrad-Verzahnungsfehler-Koeffizienten und der Referenz-Winkelgeschwindigkeit bestimmt wird.

15. Das Motorfahrzeug nach Anspruch 14, wobei ein Wert, der durch Beseitigen der Zwischenzahnrad-Verzahnungsfehler-Komponente von der integrierten Nach-Beseitigungs-Winkelgeschwindigkeit erhalten wird, als Fehlzündungsparameter zur Durchführung einer Fehlzündungsbestimmung benutzt wird.

## Revendications

1. Dispositif de suppression d'erreur de dentures inter-engrenages pour un rotor impulseur de vilebrequin, comprenant :

des moyens (4b, 5b) détectant une vitesse angulaire à chaque angle de vilebrequin à partir d'une période de temps d'impulsion inter-engrenages ;

des moyens (7b) calculant, d'après la vitesse angulaire à chaque angle de vilebrequin, une vitesse angulaire relative à chaque angle de vilebrequin par rapport à une vitesse angulaire de référence détectée à proximité d'un point mort haut de compression d'un moteur ;

des moyens (8b) intégrant la vitesse angulaire relative au sein d'une plage d'angle de vilebrequin donnée pour calculer une vitesse angulaire d'intégration ;

des moyens (9b, 11b) supprimant une composante de couple d'inertie et une composante de couple de pompage de la vitesse angulaire d'intégration ou de la vitesse angulaire avant intégration pour calculer une vitesse angulaire d'intégration après suppression ;

des moyens (10b) calculant et acquérant un coefficient d'erreur de dentures inter-engrenages en divisant la vitesse angulaire d'intégration après suppression par la vitesse angulaire de référence ;

des moyens (12b) calculant une composante d'erreur de dentures inter-engrenages à chaque vitesse du moteur en utilisant le coefficient d'erreur de dentures inter-engrenages ; et

des moyens (12b) supprimant la composante d'erreur de dentures inter-engrenages de la vitesse angulaire d'intégration après suppression.

2. Dispositif de suppression d'erreur de dentures inter-engrenages pour un rotor impulseur de vilebrequin selon la revendication 1,

dans lequel les moyens détectant une vitesse angulaire détectent une vitesse angulaire dans un état dans lequel un couple de combustion n'est pas essentiellement généré.

3. Dispositif de suppression d'erreur de dentures inter-engrenages pour un rotor impulseur de vilebrequin selon l'une quelconque des revendications 1 ou 2,

dans lequel les moyens calculant une composante d'erreur de dentures inter-engrenages calculent une composante d'erreur de dentures inter-engrenages à chaque vitesse de moteur en multipliant le coefficient d'erreur de dentures inter-engrenages par la vitesse angulaire de référence.

4. Dispositif de suppression d'erreur de dentures inter-engrenages pour un rotor impulseur de vilebrequin selon l'une quelconque des revendications 1 à 3, comprenant en outre des moyens (6b) supprimant, d'un résultat de détection de la vitesse angulaire, une première composante de fluctuation de la vitesse angulaire qui se produit éventuellement avec un moteur embarqué dans un véhicule,

dans lequel les moyens calculant une vitesse angulaire relative calculent une vitesse angulaire relative visant une vitesse angulaire à partir de laquelle la première composante de fluctuation de la vitesse angulaire est supprimée, et

dans lequel, de préférence, la première composante de fluctuation de la vitesse angulaire est une composante de fluctuation de la vitesse angulaire découlant du couple de charge appliqué à partir d'un pneu ou d'une machine auxiliaire d'un véhicule entraîné par le moteur et d'un frottement d'une partie coulissante du moteur.

5. Dispositif de suppression d'erreur de dentures inter-engrenages pour un rotor impulseur de vilebrequin selon l'une quelconque des revendications 1 à 4, dans lequel les moyens calculant une vitesse angu-

laire d'intégration après suppression suppriment une composante de couple d'inertie et une composante de couple de pompage de la vitesse angulaire d'intégration.

**6.** Dispositif de suppression d'erreur de dentures inter-engrenages pour un rotor impulseur de vilebrequin selon l'une quelconque des revendications 1 à 5, dans lequel le moteur est un moteur à explosion à intervalle non uniforme ou un moteur monocylindrique.

**7.** Procédé de suppression d'erreur de dentures inter-engrenages pour un rotor impulseur de vilebrequin comprenant :

la détection d'une vitesse angulaire à chaque angle de vilebrequin à partir d'une période de temps d'impulsion inter-engrenages ;
le calcul, d'après la vitesse angulaire à chaque angle de vilebrequin, d'une vitesse angulaire relative à chaque angle de vilebrequin par rapport à une vitesse angulaire de référence détectée à proximité d'un point mort haut de compression d'un moteur ;
l'intégration de la vitesse angulaire relative au sein d'une plage d'angle de vilebrequin donnée pour calculer une vitesse angulaire d'intégration ;
la suppression d'une composante de couple d'inertie et d'une composante de couple de pompage de la vitesse angulaire d'intégration pour calculer une vitesse angulaire d'intégration après suppression ;
le calcul et l'acquisition d'un coefficient d'erreur de dentures inter-engrenages en divisant la vitesse angulaire d'intégration après suppression par la vitesse angulaire de référence ;
le calcul d'une composante d'erreur de dentures inter-engrenages à chaque vitesse du moteur en utilisant le coefficient d'erreur de dentures inter-engrenages ; et
la suppression de la composante d'erreur de dentures inter-engrenages de la vitesse angulaire d'intégration après suppression.

**8.** Procédé de suppression d'erreur de dentures inter-engrenages pour un rotor impulseur de vilebrequin selon la revendication 7,
dans lequel une vitesse angulaire est détectée dans un état dans lequel le couple de combustion n'est pas essentiellement généré.

**9.** Procédé de suppression d'erreur de dentures inter-engrenages pour un rotor impulseur de vilebrequin selon l'une quelconque des revendications 7 ou 8,
dans lequel une composante d'erreur de dentures inter-engrenages à chaque vitesse de moteur est calculée en multipliant le coefficient d'erreur de dentures inter-engrenages par la vitesse angulaire de référence.

**10.** Procédé de suppression d'erreur de dentures inter-engrenages pour un rotor impulseur de vilebrequin selon l'une quelconque des revendications 7 à 9,
dans lequel une première composante de fluctuation de la vitesse angulaire qui se produit éventuellement avec un moteur embarqué dans un véhicule est supprimée d'un résultat de détection de la vitesse angulaire, dans lequel une vitesse angulaire relative est calculée en visant une vitesse angulaire à partir de laquelle la première composante de fluctuation de la vitesse angulaire est supprimée, et
dans lequel, de préférence, la première composante de fluctuation de la vitesse angulaire est une composante de fluctuation de la vitesse angulaire découlant du couple de charge appliqué à partir d'un pneu ou d'une machine auxiliaire d'un véhicule entraîné par le moteur et d'un frottement d'une partie coulissante du moteur.

**11.** Procédé de suppression d'erreur de dentures inter-engrenages pour un rotor impulseur de vilebrequin selon l'une quelconque des revendications 7 à 10,
dans lequel une composante de couple d'inertie et une composante de couple de pompage sont supprimées de la vitesse angulaire d'intégration.

**12.** Procédé de suppression d'erreur de dentures inter-engrenages pour un rotor impulseur de vilebrequin selon l'une quelconque des revendications 7 à 11,
dans lequel le moteur est un moteur à explosion à intervalle non uniforme ou un moteur monocylindrique.

**13.** Procédé de suppression d'erreur de dentures inter-engrenages pour un rotor impulseur de vilebrequin selon l'une quelconque des revendications 7 à 12, comprenant :

la détection d'une vitesse angulaire à chaque angle de vilebrequin d'un véhicule ordinaire qui comprend un rotor impulseur de vilebrequin idéal dont l'erreur de dentures inter-engrenages est essentiellement zéro ;
le calcul d'une vitesse angulaire relative à chaque angle de vilebrequin par rapport à une vitesse angulaire de référence détectée à proximité du point mort haut de compression du moteur d'après la vitesse angulaire à chaque angle de vilebrequin ;
l'intégration de la vitesse angulaire relative au sein d'une plage d'angle de vilebrequin donnée pour calculer une vitesse angulaire d'intégration ;
la suppression d'une composante de couple

d'inertie de la vitesse angulaire d'intégration pour déterminer une composante de couple de pompage ; et

l'établissement de données à une unité de commande électronique (ECU) et l'utilisation des données comme composante de couple de pompage.

**14.** Véhicule à moteur, comprenant :

des moyens détectant une vitesse angulaire à chaque angle de vilebrequin à partir d'une période de temps d'impulsion inter-engrenages ;

des moyens calculant, d'après la vitesse angulaire à chaque angle de vilebrequin, une vitesse angulaire relative à chaque angle de vilebrequin par rapport à une vitesse angulaire de référence détectée à proximité d'un point mort haut de compression d'un moteur ;

des moyens intégrant la vitesse angulaire relative au sein d'une plage d'angle de vilebrequin donnée pour calculer une vitesse angulaire d'intégration ;

des moyens supprimant une composante de couple d'inertie et une composante de couple de pompage de la vitesse angulaire d'intégration pour calculer une vitesse angulaire d'intégration après suppression ;

des moyens calculant et acquérant un coefficient d'erreur de dentures inter-engrenages de la vitesse angulaire d'intégration après suppression ;

des moyens calculant une composante d'erreur de dentures inter-engrenages à chaque vitesse du moteur en utilisant le coefficient d'erreur de dentures inter-engrenages ; et

des moyens supprimant la composante d'erreur de dentures inter-engrenages de la vitesse angulaire d'intégration après suppression, dans lequel la vitesse angulaire d'intégration après suppression calculée d'après une vitesse angulaire détectée dans un état dans lequel le couple de combustion est essentiellement non généré, est fixée comme une composante d'erreur de dentures inter-engrenages ;

la composante d'erreur de dentures inter-engrenages est divisée par la vitesse angulaire de référence pour calculer et acquérir un coefficient d'erreur de dentures inter-engrenages ; et

une composante d'erreur de dentures inter-engrenages à chaque vitesse du moteur est déterminée à partir d'un produit du coefficient d'erreur de dentures inter-engrenages et de la vitesse angulaire de référence.

**15.** Véhicule à moteur selon la revendication 14, dans lequel une valeur obtenue en supprimant la composante d'erreur de dentures inter-engrenages de la vitesse angulaire d'intégration après suppression est utilisée comme paramètre de raté d'allumage pour exécuter une décision de raté d'allumage.

FIG. 1

Mref

M

DRIVE IN A FUEL CUT STATE

DRIVE IN A FUEL CUT STATE

E

4a

3ref

2

4b

2

3

200

300

100

**PUMPING TORQUE COMPONENT EXTRACTION APPARATUS**

- CRANK ANGULAR VELOCITY MEASUREMENT UNIT ~5a
- 720-DEGREE FILTER PROCESSING UNIT ~6a
- RELATIVE ANGULAR VELOCITY CALCULATION UNIT ~7a
- INTEGRATION ANGULAR VELOCITY CALCULATION UNIT ~8a
- INERTIA TORQUE COMPONENT REMOVAL UNIT ~9a

**INTER-GEAR TEETH ERROR COEFFICIENT LEARNING DEVICE**

- CRANK ANGULAR VELOCITY MEASUREMENT UNIT ~5b
- 720-DEGREE FILTER PROCESSING UNIT ~6b
- RELATIVE ANGULAR VELOCITY CALCULATION UNIT ~7b
- INTEGRATION ANGULAR VELOCITY CALCULATION UNIT ~8b
- INERTIA TORQUE COMPONENT REMOVAL UNIT ~9b
- INTER-GEAR TEETH COEFFICIENT LEARNING UNIT ~10b

**MISFIRE DECISION DEVICE**

- CRANK ANGULAR VELOCITY MEASUREMENT UNIT ~5b
- 720-DEGREE FILTER PROCESSING UNIT ~6b
- RELATIVE ANGULAR VELOCITY CALCULATION UNIT ~7b
- INTEGRATION ANGULAR VELOCITY CALCULATION UNIT ~8b
- INERTIA TORQUE COMPONENT REMOVAL UNIT ~9b
- PUMPING TORQUE COMPONENT REMOVAL UNIT ~11b
- INTER-GEAR TEETH ERROR COMPONENT REMOVAL UNIT ~12b
- MISFIRE DECISION UNIT ~13b

USE PUMPING TORQUE DATA

USE PUMPING TORQUE DATA

ECU

$\Sigma\omega\omega1', \Sigma\omega\omega2'$

SET PUMPING TORQUE DATA

LEARNING TEETH ERROR COEFFICIENT

USE LEARNED TEETH ERROR COEFFICIENT

FIG. 2

FIG. 3

FIG. 4

FIG. 5

FIG. 6

Tq

CRANK ANGLE (deg)

FIG. 7

Δω

(1) INTEGRATION VALUE OF THE RELATIVE ANGULAR VELOCITY
(2) INERTIA TORQUE COMPONENT
(3) PUMPING COMPONENT

## FIG. 8

PUMPING TORQUE COMPONENT

## FIG. 9

CYLINDER

(1) INTEGRATION VALUE OF THE RELATIVE ANGULAR VELOCITY
(2) INERTIA TORQUE COMPONENT
(3) PUMPING COMPONENT
(4) INTER-GEAR TEETH ERROR COMPONENT

FIG. 10

# FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0177692 A2
- JP 2008111354 A